# EUROPEAN PATENT SPECIFICATION

(11) **EP 2 457 741 B1**
(45) Date of publication and mention of the grant of the patent: **26.03.2014**
(21) Application number: 11190214.4
(22) Date of filing: 23.11.2011
(51) Int. Cl.: B60C 1/00, C09D 193/00, C08L 21/00, C08L 9/06, C09D 193/04

(54) **Promoting uncured tack and cured adhesion for tire component rubber compositions including a tread strip**
Förderung der Haftung von Gummizusammensetzungen von Reifenkomponenten in ungehärtetem und gehärtetem Zustand und von Laufflächenstreifen
Promotion du collage non durci et de l'adhésion durcie pour compositions de caoutchouc de composantes de pneu incluant une éclisse de chape

(30) Priority: 24.11.2010 US 416791 P; 27.10.2011 US 201113282560
(43) Date of publication of application: 30.05.2012
(73) Proprietor: The Goodyear Tire & Rubber Company, Akron, OH 44316-0001 (US)
(72) Inventor: Majumdar, Ramendra Nath, Hudson, OH Ohio 44236 (US); Sandstrom, Paul Harry, Cuyahoga Falls, OH Ohio 44223 (US); Sandstrom, Erik Paul, Uniontown, OH Ohio 44685 (US)
(74) Representative: Kutsch, Bernd

(56) References cited:
- EP-A1- 1 902 864
- EP-A1- 2 033 812
- EP-A2- 2 022 823
- GB-A- 1 236 677
- US-A- 3 634 352
- US-A- 3 860 505
- US-A- 3 929 755

## Description

### Field of the Invention

This invention relates to promoting building tack for an uncured rubber composition and promoting cured adhesion between rubber compositions as components for a tire and a tire prepared thereby. The uncured building tack and cured adhesion is observed to be promoted, for example, by application of a composition containing rosin ester or hydrogenated rosin ester and at least one of uncured sulfur curable rubber, sulfur based rubber curative, reinforcing filler, tackifier resin and high boiling organic solvent. In one embodiment, the invention relates to a tire rubber tread splice.

### Background of the Invention

Rubber tires are often prepared by building an assembly of uncured, sulfur curable, rubber components. It is important that the surfaces of the uncured rubber components have a degree of building tack so that when the surfaces of the uncured rubber components are pressed together to form a tire assembly, or at least a portion of a tire assembly, they sufficiently adhere together for tire building purposes as is well known to those having skill in such art.

For example, a circumferential uncured, sulfur curable, rubber tread strip might be applied to form a tire assembly, namely an assembly of uncured rubber components, many of which are in contact with each other for which building tack for their interfacial surfaces is important.

In practice, the uncured rubber tread strip might be applied, or wound around, the tire carcass with the ends of the circumferential uncured rubber strip joined in a form of a splice. The ends of the tread strip are generally cut (skived) at an angle, such as for example, a 20°C angle (e.g. a 20°C angle to the horizontal plane of the uncured tread strip), to thereby promote an increase in the contact area of the joined surfaces of the ends of the uncured strips. Such skiving procedure for tire tread strips is well known to those having skill in such art.

Generally it is desired that the surfaces of the uncured rubber components, such as for example the ends of the tread rubber strip have a degree of tackiness, sometimes referred to as building tack, so that when the uncured rubber components, for example the ends of the tread rubber strip, are pressed together, the composite of rubber compositions, for example the tread splice, holds together and is suitable for subsequent shaping and curing the tire. However, it is sometimes desired to promote an increase in building tack for the surfaces of the uncured rubber components, for example, the ends of the uncured rubber tread strip.

Historically, an organic solvent, or an organic solvent based, rubber-containing, composition, which might sometimes be referred to as a cement, might sometimes be applied, where appropriate, to the one or more surfaces of an uncured rubber component to promote building tack for the uncured rubber surfaces. For example, ends, or faces, of opposing skived surfaces of an uncured tire tread strip may be so-treated to promote building tack.

Examples of various cements for such purpose and joined rubber tread splices, in general, may be referred to in one or more of US-A- 3,335,041; US-A- 3,421,565; US-A- 3,342,238; US-A- 3,514,423; US-A- 4,463,120 and US-A- 4,539,365. It is readily observed that such exemplary cements are typically based on, for example, relatively volatile solvent solutions of compositions comprised of, for example, combination of a base rubber, carbon black, tackifier resin and curative and which may also contain an oil. Further exemplary are US-A- 3,335,041, US-A- 4,539,365, US-A- 4,497,927 and US-A- 5,951, 797.

Due to the small adhesion area and large strain potentially applied to a tread splice, tackifying compositions to promote rubber tack for this application are often limited to organic solvent based compositions to tackify the uncured rubber. It is believed that the solvents increase the molecular mobility of the polymers in the adhesive and increase the wetting of the end surfaces of the rubber tread strip at the splice. Apparently the wetting and molecular mobility promote good adhesion to the substrate. Water based adhesives have replaced rubber cements in some less demanding applications due to their lower volatile organic emissions. Elastomeric laminates containing a solventless elastomeric adhesive such as disclosed in US-A-5,503,940 5,503,940 have been used to adhere treads to a buffed tire carcass.

For this invention it is desired to evaluate various candidates for both promoting building tack for surfaces of uncured rubber compositions and to promote adhesion between opposing surfaces of uncured rubber substrates and, also, to promote adhesive strength for the cured composite of the opposing rubber substrates.

In the description of this invention, the terms "rubber" and "elastomer" if used herein, may be used interchangeably, unless otherwise prescribed. The terms "rubber composition", "compounded rubber" and "rubber compound", if used herein, are used interchangeably to refer to "rubber which has been blended or mixed with various ingredients and materials".

The term "phr" where used herein, and according to conventional practice, refers to parts of a respective material per 100 parts by weight of rubber, or elastomer.

GB-A- 1 236 677 describes a method of improving the building tack of a surface of an uncured, sulfur curable rubber composition by proving a coating of a rosin ester to the uncured rubber surface.

EP-A- 1 902 864 describes a similar method for providing rubber compositions with improved building tack for use in multi ply rubber goods such as tires.

US-A- 3,860,505 and US-A- 3,634,352 describe further rubber compositions having an improved building tack.

US-A- 3,929,755 describes the use of pyrolyzed rosin products as synthetic rubber tackifiers.

EP-A- 2 033 812 and EP-A- 2 022 823 describe further rubber compositions comprising a tackifier resin.

### Summary of the Invention

The invention relates to a method in accordance with claim 1 and to a tire in accordance with claim 7.

Dependent claims refer to preferred embodiments of the invention.

In accordance with one aspect of this invention a method of promoting building tack for a surface of an uncured, sulfur curable, rubber composition comprises providing a coating thereon of at least one of rosin ester and hydrogenated rosin ester, particularly by providing a coating of at least one of liquid rosin ester and liquid hydrogenated rosin ester, to said uncured rubber surface.

In one embodiment, said coating is a composition comprising a combination of rosin ester or hydrogenated rosin ester and at least one of uncured sulfur curable rubber, sulfur based rubber curative, reinforcing filler, tackifier resin and high boiling predominately hydrocarbon solvent.

Thus, the rosin ester or hydrogenated rosin ester is applied in a liquid form to the uncured rubber surface. While it is preferred that the rosin ester or hydrogenated rosin ester is liquid at 23°C (e.g. at about an ambient room temperature) it is to be appreciated that it may have a melting point higher than 23°C, for example up to 60°C, so that it may be necessary to heat it to liquify it before application as a coating to the uncured rubber surface.

Such rosin may be, for example, at least one of gum rosin, wood rosin and tall oil rosin, all of which are well known rosins.

Historically, rosins are solid resinous materials comprised primarily of rosin acids that occur naturally in pine trees. As indicated above, the three major sources of rosin are gum rosin, wood rosin and tall oil rosin. Gum rosin is generally from the oleoresin extrudate of the living pine tree. Wood rosin is generally from the oleoresin contained in aged tree stumps. Tall oil rosin is from the waste liquor recovered as a by-product in the Kraft paper industry.

As indicated, said rosin ester may be an ester of a hydrogenated rosin (esterified rosin acid of which the rosin is primarily composed) and referred to herein as a hydrogenated rosin ester in a sense that a hydrogenated rosin is esterified.

A further description of such rosins, as well as some rosin esters, may be found, for example, in US-A- 5,504,127.

Such rosins may be esterified, for example, by reaction with a saturated aliphatic alcohol, (used for the rosin esterification) preferably a low molecular weight aliphatic alcohol, representative of which are, for example, methyl alcohol, ethyl alcohol, isopropyl alcohol and n-propyl alcohol, particularly methyl alcohol.

Alternately, as indicated, a tack promoting composition for the surface of an uncured, sulfur curable rubber composition may be provided which comprises:
(A) at least one of:
   (1) uncured, sulfur curable, diene-based elastomer (e.g. exclusive of isobutylene based rubber such as for example butyl rubber and halogenated butyl rubber),
   (2) sulfur curative for said diene-based elastomer comprising sulfur and at least one sulfur vulcanization accelerator,
   (3) a reinforcing filler comprising at least one of rubber reinforcing carbon black and silica, preferably precipitated silica,
   (4) a tackifier resin (other than rosin ester or hydrogenated rosin ester),
   (5) a solvent, preferably a predominantly hydrocarbon solvent, having a boiling point of at least 180°C and;
(B) at least one of rosin ester and hydrogenated rosin ester (which may act as a solvent for the tack promoting composition).

It is to be appreciated that said tack promoting composition which contains an uncured, sulfur curable, diene-based rubber may desirably not contain a sulfur curative therefore and more simply rely upon sulfur curative contained in the rubber substrate on which it is coated for interfacial sulfur curing of the coating.

In one embodiment, in order to provide a liquid coating to the surface of said uncured rubber surface, said rosin ester, or hydrogenated rosin ester, based composition may include up to 30, for example from 5 to 20, weight percent of a solvent having a boiling point of at least 180°C to reduce its viscosity, if desired. Such solvent is preferably predominately hydrocarbon (predominantly carbon and hydrogen atoms) and therefore basically inert in a sense of being principally chemically inert to said rosin ester and hydrogenated rosin ester. Solvents having boiling points below 180°C are therefore to be excluded.

In one embodiment, such method includes applying a coating of said liquid rosin ester, hydrogenated rosin ester, or said tack promoting composition thereof, which may alternately contain a solvent having a boiling point of least 180°C to reduce its viscosity, to one or both opposing ends of an uncured, sulfur curable, tread rubber strip and adhering the opposing ends of said uncured tread rubber strip together with said coating therebetween.

In practice, as indicated, said sulfur curative may be provided as a curative package comprising sulfur and at least one sulfur vulcanization accelerator.

Representative of a hydrogenated methyl ester of wood rosin is, for example, Hercoln® D from Pinova, Inc.

Methyl esters of rosins, including hydrogenated methyl esters of rosins may be desirable because they may have a relatively low viscosity at room temperature, or 23°C and therefore may be easier to apply, as a liquid, to the uncured rubber substrate.

The composition for this invention is desirably free of petroleum oil (petroleum derived oil) and free of organic solvent having a boiling point lower than 180°C, and also free of water.

Such composition varies from and is a departure from volatile solvent based contact adhesives for adhering spliced ends of an uncured rubber tread strip together in one sense that it does not contain volatile organic solvents and, in particular, organic solvents having a boiling point of less than 180°C.

In further accordance with this invention, a composite comprised of an uncured, sulfur curable rubber composition is provided having a tack promoting coating on at least one surface thereof comprised of said liquid rosin ester, hydrogenated rosin ester or said tack promoting composition thereof.

In additional accordance with this invention, a tire is provided where said tire comprises an assembly of uncured sulfur curable rubber components wherein at least one of said rubber components is said composite.

In further accordance with this invention, two of said rubber components are adjoining rubber components (rubber components which adjoin each other) and wherein at least one of said adjoining rubber components comprises said composite of uncured rubber and said tack promoting coating thereon wherein said tack promoting coating is positioned between said adjoining rubber components.

In further accordance with this invention, said tire assembly of uncured rubber components is provided wherein one of said components is an uncured circumferential rubber tread strip with opposing ends of said rubber tread strip adhered together with said tack promoting rosin ester, hydrogenated rosin ester, or said tack promoting composition thereof therebetween.

In one embodiment, said tire assembly is sulfur cured to form a tire.

It is undertaken herein to evaluate candidates to promote building tack for surfaces of uncured rubber compositions together promoting bonding strength between two co-vulcanized rubber compositions which do not contain volatile organic solvents (solvents having a boiling point below 180°C) and do not contain petroleum based oil.

In one embodiment, the candidate is applied to at least one of, and optionally both of, opposing uncured surfaces of an uncured rubber composition(s), such as, for example ends of an uncured rubber tread strip and their opposing surfaces then adhered together to form a composite thereof and the composite co-cured to form an integral cured composite thereof with the candidate therebetween.

In practice, the candidate comprise, for example, a liquid rosin ester or hydrogenated rosin ester, or a composition comprising, for example, based on parts per weight per 100 parts by weight rosin ester or hydrogenated rosin ester (phr) of at least one of:
(A) up to 15 phr of at least one uncured, sulfur curable, rubber including cis 1,4-polyisoprene natural rubber and/or at least one diene based rubber, preferably comprising of least one of synthetic cis 1,4-polyisoprene rubber and cis 1,4-polybutadiene rubber and styrene/butadiene copolymer rubber;
(B) curative for said rubber composed of sulfur and alternately at least one sulfur cure accelerator (e.g. up to 1 phr of sulfur);
(C) up to 10 phr of a reinforcing filler comprising at least one of rubber reinforcing carbon black and precipitated silica with a silica coupler for said precipitated silica;
(D) up to 3 phr of a tackifier resin (rubber tackifying resin such as, for example, tackifier resin comprising, for example, phenol formaldehyde or phenol acetylene based tackifier resins), and
(E) solvent (e.g. predominately hydrocarbon solvent) having a boiling point of at least 180°C (e.g. up to 30 phr, alternately from 5 to 20, phr thereof).

As indicated, if desired, particularly where a lower viscosity composition is desired, the composition may contain up to 30 phr of organic solvent having a boiling point of at least 180°C.

As heretofore indicated, the composition is free of organic solvents having boiling points below 180°C. As indicated, the composition is also free of water.

In one embodiment, an important aspect of the invention is that the composition can contain an uncured sulfur vulcanizable rubber.

In one aspect, it is desirable for the composition to have a green tack (adhesion) value, greater than 2, preferably greater than 4, Newtons (N) per a one inch (2.54 cm) wide test area.

Where a solvent might be used to prepare the candidate, selection of the solvent is not considered as being a critical feature of the invention so long as it is predominantly hydrocarbon and has a boiling point of greater than 180°C.

In the practice of this invention, it is understood that, where appropriate, suitable rubber compounding ingredients can be added to the composition, if desired, including one or more of antidegradants, pigments, zinc oxide, stearic acid, zinc stearate and cure accelerators.

It is to be appreciated that the preparation of the tire assembly of components, application or building of the tread onto the tire and the vulcanizing, or curing, of the assembly in a suitable mold under conditions of pressure and elevated temperature are well known to those having skill in such art.

The following examples are provided which are intended to be illustrative in nature and the parts and percentages by weight unless otherwise indicated.

### EXAMPLE I

Candidates were evaluated, as reported in Tables 1 and 2, for both their suitability of providing building tack for joining two uncured rubber compositions comprised of emulsion polymerization prepared styrene/butadiene rubber (E-SBR) and cis 1,4-polybutadiene rubber in a weight ratio of 70/30, and, also, providing cured adhesive strength for the two joined and co-cured rubber compositions, namely providing a sulfur co-cured composite of two rubber compositions with a thin layer of the Candidate composition therebetween.

The first column in Tables 1 and 2 reports original and aged tack and adhesion where no surface treatment is used where it can be seen that original and aged tack were very poor which points out a need for improving the tack.

Candidate A was a Control Candidate composition for comparison purposes as a solvent based adhesive comprised of a volatile organic solvent such as, for example, n-heptane, uncured sulfur curable rubber, carbon black and sulfur curative comprised of sulfur and sulfur cure accelerator.

Candidate B was comprising rosin oil, not a rosin ester.

Candidate C was a liquid rosin ester. It can be mentioned that a petroleum oil has previously been evaluated as a coating but did not add any appreciable tack to the surface of the uncured rubber substrate.

Candidate D was a composition comprising a liquid hydrogenated wood rosin methyl ester (methyl ester of hydrogenated wood rosin), and the remainder of ingredients of Candidate A except that the volatile organic solvent was not used.

Uncured rubber substrates were provided comprised of sulfur curable conjugated diene-based elastomers, namely the E-SBR and cis 1,4-polybutadiene, rubber reinforcing carbon black, fatty acid, zinc oxide, sulfur and sulfur cure accelerator(s).

Two of the uncured, sulfur curable, rubber substrates were pressed together with a thin Candidate composition therebetween with tack results shown in Table 1. Another composite thereof was prepared and cured at an elevated temperature and the cured adhesion results also shown in Table 1.

For the evaluation reported in Table 1, a protective polyethylene film was removed from the surfaces of the respective uncured rubber substrates to create a fresh uncured rubber surface.

For aged evaluation reported in Table 2, a protective polyethylene film was removed from the surfaces of the respective uncured rubber substrates and the uncovered rubber surfaces exposed to the atmosphere (thereby exposed to atmospheric conditions) for 7 days to allow various ingredients within the rubber to migrate to the rubber surfaces for the rubber surface to become aged.

The tack and adhesion was measured by a force displacement test apparatus with results shown in the following Tables.

**Table 1 - Uncured Tack and Cured Adhesion**

| | | Control | | Experimental | |
|---|---|---|---|---|---|
| | | A | B | C | D |
| | No Surface Treatment | Volatile Solvent Cpsn | Rosin Oil | Liquid Hydrogenated Rosin Ester w/ Tackifier | Liquid Hydrogenated Rosin Ester Cpsn |
| Uncured surface tack¹ Newtons/cm | 0.03 | 3.1 | 0.07 to 1.0 | 0.63 | 7+ |
| **Acceptable** | **No** | **Yes** | **No** | **No** | **Yes** |
| | | | | | |
| Cured adhesion² Newtons/cm | 458+ | 469+ | 0 | 152 | 122+ |
| **Acceptable** | **Yes** | **Yes** | **No** | **Yes** | **Yes** |

**Table 2 - Aged Tack and Cured Adhesion**

| | | | | | |
|---|---|---|---|---|---|
| Uncured surface tack¹ Newtons/cm | 0.035 | 3.8 | N/A | 0.56 | 3.2 |
| **Acceptable** | **No** | **Yes** | **N/A** | **No** | **Yes** |
| | | | | | |
| Cured adhesion² Newtons/cm | 122 | 134 | N/A | 304+ | 189+ |
| **Acceptable** | **Yes** | **Yes** | **N/A** | **Yes** | **Yes** |
| | | | | | |
| **Acceptable for BOTH fresh and** | | | | | |
| **aged tack and cured adhesion** | **No** | **Yes** | **No** | **No** | **Yes** |

| | | | | | |
|---|---|---|---|---|---|
| N/A means "Not Applicable" Cpsn means "Composition" | | | | | |

### Observations from Tables 1 and 2 above

For an acceptable uncured original and aged tack values, where an acceptable tack value for the purposes of this invention is at least 1.6 Newtons/cm, only Control A (volatile solvent cpsn) and Candidate D (liquid hydrogenated rosin ester cpsn) were acceptable for both unaged and aged tack values for which it was hoped, and was observed, that Candidate D would as least be equivalent to Candidate A.

For an acceptable cured and aged cured adhesion values, where an acceptable adhesion value for the purposes of this invention is at least 70 Newtons/cm, Candidates A, C and D were acceptable and Candidate B was not acceptable in terms of cured adhesion.

In conclusion, only Candidate D (liquid hydrogenated rosin ester composition) provided all of acceptable initial uncured tack and aged tack for the uncured rubber composition, in combination with acceptable cured adhesion values as a replacement for Candidate A, a volatile solvent (boiling point of less than 180°C, namely n-heptane) based composition.

It is observed that Candidate B, composed of rosin oil, gave negligible uncured tack and cured adhesion values and was therefore considered as being unacceptable.

Candidate C, which is mostly liquid hydrogenated rosin ester, can be seen in Table 1 enhanced both fresh (original) and aged tack values of the rubber surface by more than 10 fold. For this specific rubber composition, even with such tack enhancement did not reach an acceptable level. However, it is to be appreciated that for a different rubber composition the rubber surface tack might become an acceptable tack value.

### ¹ Uncured Tack Measurements

The tack measurements were measured with a force displacement analytical equipment. The tack determination measures the interfacial tack of two green, or uncured, samples of a rubber composition after having been compressed together with an applied force.

### The Tack Test

In general, uncured rubber compound is calendered and test samples are built from two uncured 3" x 6" (7.6 x 15.2 cm) rubber samples with masking tape applied to one side and a polyethylene sheet is applied to the other side.

For original tack values the polyethylene sheet is removed to expose a fresh surface.

For aged tack values, the polyethylene sheet is removed and the surface allowed to age, namely be exposed to atmospheric conditions, for a period of time, namely 7 days.

For tack determination, two test pieces are pressed together, with a thin layer of candidate positioned therebetween, by an automated apparatus for 30 seconds at 25°C ± 2°C at 0.21 MPa (2 atmospheres) of pressure. The calendered sample is then cut with a specimen die so that five samples each having a longitudinal width of one inch (2.54 cm) ready to be pulled apart on a force displacement tester or equivalent with pneumatic jaws, such as is available from Instron.

The sample (composite) is removed from the press and several specimen samples cut from the pressed sample.

The rubber layers were pulled apart to measure the tack between the layers at 25°C with a force displacement apparatus at a cross head speed of 12.7 cm/min.

### ² Cured Adhesion Measurements

Cured adhesion is measured similar to the aforesaid tack test except that the composite was cured at 28 minutes at 23°C under a pressure of 0.671 MPa and the adhesion measured at 95°C.

### EXAMPLE II

A Candidate was evaluated for both its suitability of providing building tack for joining two uncured rubber compositions comprised of natural rubber based rubber compositions, and, also, providing cured adhesive strength for the two joined and co-cured rubber compositions, namely providing a sulfur co-cured composite of two rubber compositions with a thin layer of the Candidate composition therebetween.

Rubber Sample E was a Control rubber Sample composition for comparison purposes without its surface having been treated with Candidate, therefore without surface treatment.

Candidate F was Candidate D of Example I comprised of the liquid hydrogenated wood rosin methyl ester composition (cpsn) and the remainder of ingredients for Candidate A of Example I, except that the volatile organic solvent was not used, although it did contain a minimal amount of 5 phr of predominantly hydrocarbon based solvent having a boiling point greater than 180°C to reduce the viscosity of the composition, namely Hydrosol® from Total Petrochemicals, Inc. which is indicated as being a mineral oil.

Uncured rubber substrates comprised of the aforesaid sulfur curable natural rubber based rubber composition, rubber reinforcing carbon black, fatty acid, zinc oxide, sulfur and sulfur cure accelerator(s) were prepared.

Two of the uncured, sulfur curable, rubber substrates were pressed together with a thin Candidate composition therebetween with tack results shown in Table 3. Another composite thereof was prepared and cured at an elevated temperature and the cured adhesion results also shown in Table 3.

For the evaluation reported in Table 3, a protective polyethylene film was removed from the surfaces of the respective uncured rubber substrates to create a fresh uncured rubber surface.

For aged evaluation reported in Table 4, a protective polyethylene film was removed from the surfaces of the respective uncured rubber substrates and the uncovered rubber surfaces exposed to the atmosphere (thereby exposed to atmospheric conditions) for 7 days to allow the rubber surfaces to become aged.

The tack and adhesion was measured by the force displacement test apparatus with results shown in the following Tables.

**Table 3 - Uncured Tack and Cured Adhesion**

| | No Surface Treatment | Candidate |
|---|---|---|
| | E | F |
| Uncured surface tack¹ Newtons/cm | 3.63 | 21.94 |
| **Acceptable** | **Yes** | **Yes** |
| | | |
| Cured adhesion² Newtons/cm | 667 | 695 |
| **Acceptable** | **Yes** | **Yes** |

**Table 4 - Aged Tack and Cured Adhesion**

| | | |
|---|---|---|
| Uncured aged surface tack¹ Newtons/cm | 1.08 | 2.62 |
| **Acceptable** | **No** | **Yes** |
| | | |
| Cured aged adhesion² Newtons/cm | 480 | 249 |
| **Acceptable** | **Yes** | **Yes** |
| | | |
| **Acceptable for BOTH fresh and aged tack** | | |
| **and cured adhesion** | **No** | **Yes** |

### Observations from Tables 3 and 4 above

For an acceptable uncured original and aged tack values, where an acceptable tack value for the uncured rubber composition for the purposes of this invention is at least 1.6 Newtons/cm, rubber Sample E (untreated rubber sample) was observed to be acceptable for both unaged and unacceptable for aged tack values. Both aged and fresh (unaged) tack values for the surface of the rubber composition become acceptable when the rubber surface was treated with the Candidate F which was based on the hydrogenated rosin ester.

For an acceptable cured and aged cured adhesion values, where an acceptable adhesion value for the purposes of this invention is at least 70 Newtons/cm, both rubber Sample E and the rubber sample with its surface treated with Candidate F were acceptable, for which it was hoped, and was observed, that Candidate F would successfully be at least equivalent to untreated rubber Sample E.

## Claims

1. A method of promoting building tack for a tread strip splice of a tire, the tread strip splice being formed of ends of a sulfur curable tread strip having an uncured rubber composition and of a coating therebetween, the method comprising providing an uncured rubber composition surface and a coating to the uncured rubber composition surface, wherein the coating is of a composition comprising a combination of
at least one of liquid rosin ester liquid at 60°C and liquid hydrogenated rosin ester liquid at 60°C with
an uncured sulfur curable rubber, a sulfur based rubber curative, a filler, a tackifier resin and a solvent having a boiling point greater than 180°C.

2. The method of claim 1 wherein the rosin ester is the liquid hydrogenated rosin ester.

3. The method of claim 1 or 2 wherein the liquid rosin ester and/or the liquid hydrogenated rosin ester are liquid at a temperature in a range of from 40°C to 60 °C.

4. The method of at least one of the previous claims wherein the rosin for the liquid rosin ester and/or the liquid hydrogenated rosin ester comprises at least one of gum rosin, wood rosin and tall oil rosin.

5. The method of at least one of the previous claims wherein the liquid rosin ester and/or the liquid hydrogenated rosin ester is a reaction product of rosin or hydrogenated rosin and saturated aliphatic alcohol so long as the rosin ester and/or the hydrogenated rosin ester are liquid at a temperature of 60 °C or less.

6. The method of claim 5 wherein the saturated aliphatic alcohol used for the esterification comprises at least one of methyl alcohol, ethyl alcohol, isopropyl alcohol, and n-propyl alcohol.

7. A tire having a tread comprising a tread splice, the tread strip splice being formed of ends of a sulfur curable tread strip having an uncured rubber composition and of a tack promoting coating therebetween, wherein the coating is of a composition comprising a combination of
at least one of liquid rosin ester liquid at 60°C and liquid hydrogenated rosin ester liquid at 60°C with
an uncured sulfur curable rubber, a sulfur based rubber curative, a filler, a tackifier resin and a solvent having a boiling point greater than 180°C.

8. The tire of claim 7 wherein the tack promoting coating comprises an uncured, sulfur curable, diene-based elastomer, a sulfur curative for the diene-based elastomer comprising sulfur and optionally at least one sulfur vulcanization accelerator, and a reinforcing filler comprising at least one of rubber reinforcing carbon black and silica such as precipitated silica.

9. The tire of claim 7 or 8 sulfur cured.

## Patentansprüche

1. Verfahren zur Förderung von Konfektionsklebrigkeit für eine Laufstreifenspleißung eines Reifens, wobei die Laufstreifenspleißung aus Enden eines schwefelvulkanisierbaren Laufstreifens, der eine unvulkanisierte Kautschukzusammensetzung aufweist, und aus einer Beschichtung dazwischen gebildet ist, wobei das Verfahren das Bereitstellen einer unvulkanisierten Kautschukzusammensetzungs-Oberfläche und einer Beschichtung an der unvulkanisierten Kautschukzusammensetzungs-Oberfläche umfasst, wobei die Beschichtung aus einer Zusammensetzung besteht, umfassend eine Kombination von
mindestens einem von flüssigem Harzester, der bei 60°C flüssig ist, und flüssigem hydriertem Harzester, der bei 60 °C flüssig ist, mit
einem unvulkanisierten schwefelvulkanisierbaren Kautschuk, einem schwefelbasierten Kautschukvulkanisationsmittel, einem Füllstoff, einem klebrigmachenden Harz und einem Lösungsmittel mit einem Siedepunkt höher als 180 °C.

2. Verfahren nach Anspruch 1, wobei der Harzester der flüssige hydrierte Harzester ist.

3. Verfahren nach Anspruch 1 oder 2, wobei der flüssige Harzester und/oder der flüssige hydrierte Harzester bei einer Temperatur in einem Bereich von 40 °C bis 60°C flüssig sind.

4. Verfahren nach mindestens einem der vorgenannten Ansprüche, wobei das Harz für den flüssigen Harzester und/oder den flüssigen hydrierten Harzester mindestens eines von Balsamharz, Terpentinharz und Tallharz umfasst.

5. Verfahren nach mindestens einem der vorgenannten Ansprüche, wobei der flüssige Harzester und/oder der flüssige hydrierte Harzester ein Reaktionsprodukt von Kolophonium oder hydriertem Kolophonium und gesättigtem aliphatischem Alkohol ist, solange der Harzester und/oder der hydrierte Harzester bei einer Temperatur von 60°C oder weniger flüssig sind.

6. Verfahren nach Anspruch 5, wobei der für die Veresterung verwendete gesättigte aliphatische Alkohol mindestens einen von Methylalkohol, Ethylalkohol, Isopropylalkohol und n-Propylalkohol umfasst.

7. Reifen mit einer Lauffläche, welche eine Laufflächenspleißung umfasst, wobei die Laufstreifenspleißung aus Enden eines schwefelvulkanisierbaren Laufstreifens, der eine unvulkanisierte Kautschukzusammensetzung aufweist, und aus einer klebrigkeitsfördernden Beschichtung dazwischen gebildet ist, wobei die Beschichtung aus einer Zusammensetzung besteht, umfassend eine Kombination von
mindestens einem von flüssigem Harzester, der bei 60°C flüssig ist, und flüssigem hydriertem Harzester, der bei 60 °C flüssig ist, mit
einem unvulkanisierten schwefelvulkanisierbaren Kautschuk, einem schwefelbasierten Kautschukvulkanisationsmittel, einem Füllstoff, einem klebrigmachenden Harz und einem Lösungsmittel mit einem Siedepunkt höher als 180 °C.

8. Reifen nach Anspruch 7, wobei die klebrigkeitsfördernde Beschichtung ein unvulkanisiertes, schwefelvulkanisierbares dienbasiertes Elastomer, ein Schwefelvulkanisationsmittel für das dienbasierte Elastomer, umfassend Schwefel und optional mindestens einen Schwefelvulkanisationsbeschleuniger, und einen Verstärkungsfüllstoff, umfassend mindestens eines von Kautschukverstärkungs-Carbon Black und Silika, wie etwa ausgefälltes Silika, umfasst.

9. Reifen nach Anspruch 7 oder 8, schwefelvulkanisiert.

## Revendications

1. Procédé pour favoriser l'établissement d'une adhérence immédiate pour un joint de bande de roulement de bandage pneumatique, le joint de bande de roulement étant formé par les extrémités d'une bande de roulement vulcanisable au soufre et par un revêtement entre elles, le procédé comprenant le fait de procurer une surface dont la composition est du caoutchouc non vulcanisé et un revêtement sur la surface dont la composition est du caoutchouc non vulcanisé, le revêtement représentant une composition comprenant une combinaison d'au moins un ester liquide de colophane liquide à 60 °C et un ester liquide de colophane hydrogéné liquide à 60 °C avec un caoutchouc vulcanisable au soufre non vulcanisé, un adjuvant de vulcanisation en caoutchouc à base de soufre, une matière de charge, une résine faisant office d'agent donnant du collant et un solvant dont le point d'ébullition est supérieur à 180 °C.

2. Procédé selon la revendication 1, dans lequel l'ester de colophane est un ester de colophane liquide hydrogéné.

3. Procédé selon la revendication 1 ou 2, dans lequel l'ester de colophane et/ou l'ester de colophane liquide hydrogéné sont liquides à une température dans la plage de 40 °C à 60 °C.

4. Procédé selon au moins une des revendications précédentes, dans lequel l'ester de colophane et/ou l'ester de colophane liquide hydrogéné comprennent au moins de la colophane proprement dite, de la colophane de bois et de la colophane de tallöl.

5. Procédé selon au moins une des revendications précédentes, dans lequel l'ester de colophane et/ou l'ester de colophane liquide hydrogéné représentent un produit réactionnel de colophane ou de colophane hydrogéné et d'un alcool aliphatique saturé, pour autant que l'ester de colophane et/ou l'ester de colophane hydrogéné soient liquides à une température de 60 °C ou moins.

6. Procédé selon la revendication 5, dans lequel l'alcool aliphatique saturé que l'on utilise pour l'estérification comprend au moins un membre choisi parmi le groupe comprenant l'alcool méthylique, l'alcool éthylique, l'alcool isopropylique et l'alcool n-propylique.

7. Bandage pneumatique possédant une bande de roulement comprenant un joint de bande de roulement, le joint de bande de roulement étant formé par les extrémités d'une bande de roulement vulcanisable au soufre et par un revêtement entre elles, le revêtement représentant une composition comprenant une combinaison d'au moins un ester liquide de colophane liquide à 60 °C et un ester liquide de colophane hydrogéné liquide à 60 °C avec un caoutchouc vulcanisable au soufre non vulcanisé, un adjuvant de vulcanisation en caoutchouc à base de soufre, une matière de charge, une résine faisant office d'agent donnant du collant et un solvant dont le point d'ébullition est supérieur à 180 °C.

8. Bandage pneumatique selon la revendication 7, dans lequel le revêtement qui favorise la défense immédiate comprend un élastomère vulcanisable au soufre, non vulcanisé, à base diénique, un adjuvant de vulcanisation à base de soufre pour l'élastomère à base diénique, comprenant du soufre et de manière facultative au moins un accélérateur de la vulcanisation au soufre, et une matière de charge faisant office de renforcement comprenant au moins un membre choisi parmi le groupe comprenant du noir de carbone pour le renforcement du caoutchouc et de la silice telle que la silice précipitée.

9. Bandage pneumatique selon la revendication 7 ou 8, vulcanisé au soufre.
